# EUROPEAN PATENT SPECIFICATION

(11) **EP 3 344 104 B1**
(45) Date of publication and mention of the grant of the patent: **30.12.2020**
(21) Application number: 15759442.5
(22) Date of filing: 03.09.2015
(51) Int. Cl.: A47L 9/28, A47L 11/24, G05D 1/00, G05D 1/02

(54) **SYSTEM OF ROBOTIC CLEANING DEVICES**
SYSTEM AUS ROBOTISCHEN REINIGUNGSVORRICHTUNGEN
SYSTÈME DE DISPOSITIFS DE NETTOYAGE ROBOTISÉS

(43) Date of publication of application: 11.07.2018
(73) Proprietor: Aktiebolaget Electrolux, 105 45 Stockholm (SE)
(72) Inventor: HARGERMARCK, Anders, 105 45 Stockholm (SE)
(74) Representative: Electrolux Group Patents
(86) International application number: PCT/EP2015/070140
(87) International publication number: WO 2017/036532

(56) References cited:
- EP-A1- 2 946 712
- EP-A2- 1 360 922
- EP-A2- 2 466 411
- WO-A2-01/82766
- WO-A2-2004/006034
- US-A- 5 825 981

## Description

### TECHNICAL FIELD

The invention relates to a system of robotic cleaning devices and a method of a master robotic cleaning device of controlling at least one slave robotic cleaning device.

### BACKGROUND

In many fields of technology, it is desirable to use robots with an autonomous behaviour such that they freely can move around a space without colliding with possible obstacles.

Robotic vacuum cleaners are know in the art, which are equipped with drive means in the form of a motor for moving the cleaner across a surface to be cleaned. The robotic vacuum cleaners are further equipped with intelligence in the form of microprocessor(s) and navigation means for enabling an autonomous behaviour such that the robotic vacuum cleaners freely can move around and clean a space in the form of e.g. a room. Thus, these prior art robotic vacuum cleaners has the capability of more or less autonomously vacuum cleaning a room in which furniture such as tables and chairs and other obstacles such as walls and stairs are located.

In document WO 01/82766 A2 a cleaning robot with a floor mopping assembly is disclosed. In document EP2466411 A2 a robot system having a robot, which can communicate with a base station and/or internet site via wireless communications media. Document WO 2004/006034 A2 discloses a floor treatment system comprising a self-propelled, autonomous floor treatment unit. The unit contains an electrically driven floor treatment assembly, in addition to a rechargeable power supply unit and an electrical controller. Document EP1360922 A2 discloses a robotic vacuum cleaner with a self-propelled controller with a vacuum source and a dirt receptacle. The robotic vacuum cleaner also has a self-propelled cleaning head with a suction inlet and an interconnecting hose. The controller and cleaning head cooperatively traverse a surface area in tandem with a hose connected between the cleaning head and the controller. Document US5825981A discloses robot and robot system in a manufacturing system.

Document EP2946712A1 discloses a self-propelled floor cleaning device having a first cleaning vehicle for carrying out a dry cleaning step and a second cleaning vehicle for carrying out a wet cleaning step.

In various environments where a surface is to be cleaned by a robotic cleaning device, situations may arise where the robotic cleaning device cannot reach for instance into a corner or under a sofa, and the user will manually have to remove the debris or dirt which is out of reach for the robot, or use another cleaning device suitable for cleaning the particular surface.

### SUMMARY

An object of the present invention is to solve, or at least mitigate, this problem in the art and to provide a system of robotic cleaning devices.

This object is attained in a first aspect of the invention by a system of robotic cleaning devices according to independent claim 1. The system comprises a master robotic cleaning device and at least one slave robotic cleaning device. The master robotic cleaning device comprises a propulsion system arranged to move the master robotic cleaning device, a cleaning member arranged to remove debris from a surface to be cleaned, an obstacle detection device arranged to detect obstacles, a controller arranged to position the robotic cleaning device with respect to the detected obstacles from positional data derived from the obstacle detection device, and further to control the propulsion system to move the master robotic cleaning device based on the positional data, and a wireless communication interface via which the master robotic cleaning device is arranged to submit commands the at least one slave robotic cleaning device to control a cleaning operation of the at least one slave robotic cleaning device, the commands being based on the derived positional data. The at least one slave robotic cleaning device comprises a propulsion system arranged to move the slave robotic cleaning device, a cleaning member arranged to remove debris from a surface to be cleaned, a wireless communication interface via which the slave robotic cleaning device is arranged to receive to commands submitted by the master robotic cleaning device, and a controller arranged to control the cleaning operation of the slave robotic cleaning device as indicated by the received commands.

This object is attained in a second aspect of the invention by a method according to claim 13. The method is performed by a master robotic cleaning device of controlling at least one slave robotic cleaning device. The method comprising detecting obstacles, deriving positional data from the detection of obstacles, positioning the master robotic cleaning device with respect to the detected obstacles from the derived positional data, controlling movement of the master robotic cleaning device based on the positional data, and submitting commands to the at least one slave robotic cleaning device to control a cleaning operation of said at least one slave robotic cleaning device, the commands being based on the derived positional data, wherein the cleaning operation of the slave robotic cleaning device is controlled as indicated by the submitted commands.

A system of robotic cleaning devices is provided comprising a master robotic cleaning device and at least on slave robotic cleaning device, where the master robotic cleaning device is capable of wirelessly controlling a cleaning operation of the slave robotic cleaning device.

A surface to be cleaned may for instance accommodate objects such as sofas, armchairs, bureaus, etc., under which the master robot cannot pass for performing a cleaning operation. Without a system according to the invention, the user would have to use for instance a broom or an ordinary vacuum cleaner to clean a surface below these objects.

Advantageously, the master robot instructs the slave robot, by submitting wireless control signals via its communication interface to a corresponding communication interface of the slave robot, to clean the surfaces that the master robot cannot reach based on the positional data derived by the master robot.

Further advantageous is that the slave robot is not required to be equipped with the same sophisticated obstacle detecting device as the master robot. Consequently, since the slave robot is instructed by the master robot how to navigate over the surface to be cleaned, based on positional data derived by the master robot, a less powerful slave robot controller can be used. Hence, the slave robot can advantageously be made much less complex than the master robot, with a correspondingly great reduction in cost.

In an embodiment, the master robotic device advantageously communicates to the slave robotic device a command indicating a surface over which the at least one slave robotic cleaning device is instructed to move and clean, for instance a surface located under a sofa having a clearance height less than the height of the master robot. The command may e.g. indicate the coordinates delimiting the surface. Alternatively, the command may include control data for the slave robot propulsion system in order to guide the slave robotic device over the surface to be cleaned. Upon receiving the command from the master robot, the slave robot moves to, and cleans, the surface.

In yet an embodiment, the slave robotic cleaning device is arranged to remove debris from a surface to be cleaned and gather the debris for subsequent pick-up by the master robotic cleaning device. Advantageously, there is no need to equip the slave robot with e.g. a dust container or suction fan, thereby facilitating an even less complex - and less noisy - slave robot. Further advantageous is that the slave robot becomes more or less maintenance-free, as there is no need to empty a dust container.

In still a further embodiment, the commands submitted by the master robotic cleaning device comprises data indicating a time of day or night at which the slave robotic cleaning device is instructed to perform the cleaning operation. For instance, the slave robot may advantageously be instructed to work a particular surface during night time, when no obstacles in the form of humans and animals will impede the slave robot. This is particularly advantageous in case the slave robot is not equipped with components such as a suction fan and/or a rotatable brush, in which the case the slave robot is relatively silent. In the morning, when the slave robot has gathered debris, the master robot will vacuum clean the debris from the place where the slave robot did gather the debris.

In another embodiment, the commands submitted from the master robotic cleaning device to the slave robotic cleaning device comprises an instruction to the slave robotic cleaning device to return to its charger after the cleaning operation has been performed.

In a further embodiment, the communication between the master robotic cleaning device and the slave robotic cleaning device is not performed via line-of sight-communication, but advantageously via a network such as a Wireless Local Area Network (WLAN). Thus, the master robot and the slave robot connect to the WLAN via a so called Access Point (AP) such as e.g. a home router for wireless WiFi communication. Advantageously, by communicating via a WLAN, the master robot and the slave robot can be located on a great distance from each other, such as on different floors in a building but still being capable of communicating with each other.

In still another embodiment, the master robot is advantageously arranged to communicate wirelessly, for example via Bluetooth or WLAN, with a mobile terminal (such as a smart phone, a tablet, a laptop, etc.) of a user wishing to control the cleaning operation of the slave robot 30. The user may communicate with the master robot via a particular app downloaded to the mobile terminal. Hence, the user may advantageously instruct the master robot regarding a desired cleaning operation to be performed by the slave robot, whereupon the master robot sends commands accordingly to the slave robot via its communication interface.

In yet a further embodiment, in order to facilitate the detection of the slave robot for the master robot, the slave robot is advantageously equipped with one or more light sources, such as light emitting diodes (LEDs), and/or luminous reflectors detectable by the master robot.

In still another embodiment, in order to facilitate the detection of the slave robot for the master robot, the slave robot is advantageously equipped with an optical detector configured to detect light emitted by the master robot onto the slave robot. Upon detecting the laser light emitted by the master robot, the slave robot communicates via its communication interface to the master robot that the light is detected.

In a further embodiment, by having the slave robot detected light emitted by the master robot, and instantly communicate that the light that has been detected at the optical detector, an operational clock of the master and the slave, respectively, can be synchronized to each other. Advantageously, any clock drift may be eliminated, which facilitates system navigation.

It is noted that the master robotic cleaning device and the slave robotic cleaning device may perform different types of cleaning operations. For instance, the master robot may be a vacuum cleaner while the slave robot is a floor washer.

The invention relates to all possible combinations of features recited in the claims. Further features of, and advantages with, the present invention will become apparent when studying the appended claims and the following description. Those skilled in the art realize that different features of the present invention can be combined to create embodiments other than those described in the following.

### BRIEF DESCRIPTION OF THE DRAWINGS

The invention is now described, by way of example, with reference to the accompanying drawings, in which:
Figure 1 shows a bottom view of a master robotic cleaning device according to an embodiment of the invention;
Figure 2 shows a front view of the master robotic cleaning device of Figure 1;
Figure 3 shows a front view of a system of robotic cleaning devices according to an embodiment of the invention;
Figure 4 shows a top view of a system of robotic cleaning devices according to an embodiment of the invention;
Figure 5a illustrates detection of a slave robotic cleaning device according to an embodiment of the invention;
Figure 5b illustrates detection of a slave robotic cleaning device according to another embodiment of the invention;
Figure 6 shows a top view of a system of robotic cleaning devices according to another embodiment of the invention;
Figure 7 shows a top view of a system of robotic cleaning devices according to yet another embodiment of the invention;
Figure 8 illustrates a system of robotic cleaning devices communicating via a network according to an embodiment of the invention; and
Figure 9 illustrates a system of robotic cleaning devices according to an embodiment of the invention where the master robotic cleaning device communicates with a mobile terminal.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

The invention relates to robotic cleaning devices, or in other words, to automatic, self-propelled machines for cleaning a surface, e.g. a robotic vacuum cleaner, a robotic sweeper or a robotic floor washer. The robotic cleaning device according to the invention can be mains-operated and have a cord, be battery-operated or use any other kind of suitable energy source, for example solar energy.

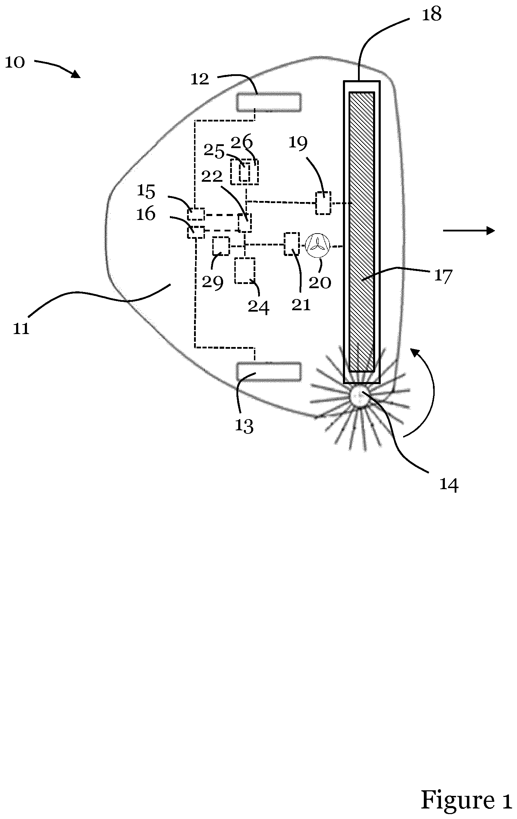

Figure 1 shows a robotic cleaning device 10 according to embodiments of the present invention from below, i.e. the bottom side of the robotic cleaning device is shown. The arrow indicates the forward direction of the robotic cleaning device. The robotic cleaning device 10 comprises a main body 11 housing components such as a propulsion system comprising driving means in the form of two electric wheel motors 15, 16 for enabling movement of the driving wheels 12, 13 such that the cleaning device can be moved over a surface to be cleaned. Each wheel motor 15, 16 are capable of controlling the respective driving wheel 12, 13 to rotate independently of each other in order to move the robotic cleaning device 10 across the surface to be cleaned. A number of different driving wheel arrangements, as well as various wheel motor arrangements, can be envisaged. It should be noted that the robotic cleaning device may have any appropriate shape, such as a device having a more traditional circular-shaped main body, or a triangular-shaped main body. As an alternative, a track propulsion system may be used or even a hovercraft propulsion system. The propulsion system may further be arranged to cause the robotic cleaning device 10 to perform any one or more of a yaw, pitch, translation or roll movement.

A controller 22 such as a microprocessor controls the wheel motors 15, 16 to rotate the driving wheels 12, 13 as required in view of information received from an obstacle detecting device (not shown in Figure 1) for detecting obstacles in the form of walls, floor lamps, table legs, around which the robotic cleaning device must navigate. The obstacles detected may also be embodied in the form of landmarks, barcodes, signposts, etc. The obstacle detecting device may be embodied in the form of a 3D sensor system registering its surroundings, implemented by means of e.g. a 3D camera, a camera in combination with lasers, a laser scanner, etc. for detecting obstacles and communicating information about any detected obstacle to the microprocessor 22. The microprocessor 22 communicates with the wheel motors 15, 16 to control movement of the wheels 12, 13 in accordance with information provided by the obstacle detecting device such that the robotic cleaning device 10 can move as desired across the surface to be cleaned. This will be described in more detail with reference to subsequent drawings.

Further, the main body 11 may optionally be arranged with a cleaning member 17 for removing debris and dust from the surface to be cleaned in the form of a rotatable brush roll arranged in an opening 18 at the bottom of the robotic cleaner 10. Thus, the rotatable brush roll 17 is arranged along a horizontal axis in the opening 18 to enhance the dust and debris collecting properties of the cleaning device 10. In order to rotate the brush roll 17, a brush roll motor 19 is operatively coupled to the brush roll to control its rotation in line with instructions received from the controller 22.

Moreover, the main body 11 of the robotic cleaner 10 comprises a suction fan 20 creating an air flow for transporting debris to a dust bag or cyclone arrangement (not shown) housed in the main body via the opening 18 in the bottom side of the main body 11. The suction fan 20 is driven by a fan motor 21 communicatively connected to the controller 22 from which the fan motor 21 receives instructions for controlling the suction fan 20. It should be noted that a robotic cleaning device having either one of the rotatable brush roll 17 and the suction fan 20 for transporting debris to the dust bag can be envisaged. A combination of the two will however enhance the debris-removing capabilities of the robotic cleaning device 10.

The robotic cleaning device 10 may further be equipped with an inertia measurement unit (IMU) 24, such as e.g. a gyroscope and/or an accelerometer and/or a magnetometer or any other appropriate device for measuring displacement of the robotic cleaning device 10 with respect to a reference position, in the form of e.g. orientation, rotational velocity, gravitational forces, etc. A three-axis gyroscope is capable of measuring rotational velocity in a roll, pitch and yaw movement of the robotic cleaning device 10. A three-axis accelerometer is capable of measuring acceleration in all directions, which is mainly used to determine whether the robotic cleaning device is bumped or lifted or if it is stuck (i.e. not moving even though the wheels are turning). The robotic cleaning device 10 further comprises encoders (not shown in Figure 1) on each drive wheel 12, 13 which generate pulses when the wheels turn. The encoders may for instance be magnetic or optical. By counting the pulses at the controller 22, the speed of each wheel 12, 13 can be determined. By combining wheel speed readings with gyroscope information, the controller 22 can perform so called dead reckoning to determine position and heading of the cleaning device 10. The controller 22 may employ e.g. the commonly used robotic localization method Simultaneous Localization and Mapping (SLAM) to position the robotic cleaning device 10 with respect to its surroundings.

The main body 11 may further be arranged with a rotating side brush 14 adjacent to the opening 18, the rotation of which could be controlled by the drive motors 15, 16, the brush roll motor 19, or alternatively a separate side brush motor (not shown). Advantageously, the rotating side brush 14 sweeps debris and dust from the surface to be cleaned such that the debris ends up under the main body 11 at the opening 18 and thus can be transported to a dust chamber of the robotic cleaning device. Further advantageous is that the reach of the robotic cleaning device 10 will be improved, and e.g. corners and areas where a floor meets a wall are much more effectively cleaned. As is illustrated in Figure 1, the rotating side brush 14 rotates in a direction such that it sweeps debris towards the opening 18 such that the suction fan 20 can transport the debris to a dust chamber. The robotic cleaning device 10 may comprise two rotating side brushes arranged laterally on each side of, and adjacent to, the opening 18.

The robotic cleaning device 10 further comprises a communication interface 29 comprising a wireless receiver and transmitter, typically embodied by a single unit known as a transceiver. The communication interface 29 communicates via e.g. infrared (IR), ultrasonic or radio-frequency (RF) signals with for instance a remote control utilizing line-of-sight communication or a server using wireless local area network (WLAN) technology.

The communication interface may further be connected to a user interface (not shown) provided on the robotic cleaning device 10 via which a user can provide the robotic cleaner 10 with a particular type of instruction, such as "start", "stop", "return to charging station", etc. The user interface may be of touch-screen type or mechanically configured comprising physical buttons to be operated. Further, the user interface may comprise display means for visually indicating a user selection. It should be noted that the user not necessarily need to provide input to the user interface by physically touching it, but may alternatively communicate with the robotic cleaner by means of the previously mentioned remote control.

With further reference to Figure 1, the controller 22 embodied in the form of one or more microprocessors is arranged to execute a computer program 25 downloaded to a suitable storage medium 26 associated with the microprocessor, such as a Random Access Memory (RAM), a Flash memory or a hard disk drive. The controller 22 is arranged to carry out a method according to embodiments of the present invention when the appropriate computer program 25 comprising computer-executable instructions is downloaded to the storage medium 26 and executed by the controller 22. The storage medium 26 may also be a computer program product comprising the computer program 25. Alternatively, the computer program 25 may be transferred to the storage medium 26 by means of a suitable computer program product, such as a digital versatile disc (DVD), compact disc (CD) or a memory stick. As a further alternative, the computer program 25 may be downloaded to the storage medium 26 over a wired or wireless network. The controller 22 may alternatively be embodied in the form of a digital signal processor (DSP), an application specific integrated circuit (ASIC), a field-programmable gate array (FPGA), a complex programmable logic device (CPLD), etc.

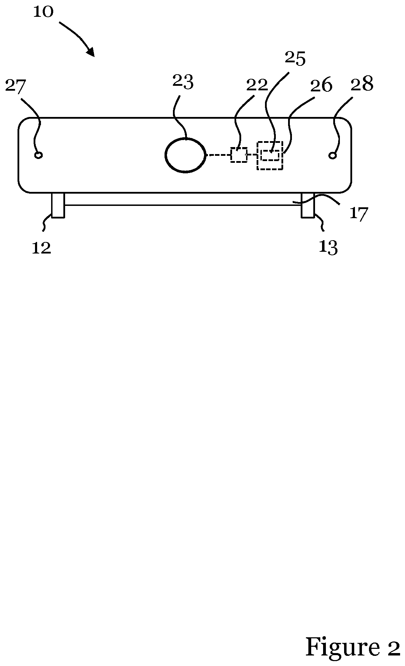

Figure 2 shows a front view of the robotic cleaning device 10 of Figure 1 in an embodiment of the present invention illustrating the previously mentioned obstacle detecting device in the form of a 3D sensor system comprising at least a camera 23 and a first and a second line laser 27, 28, which may be horizontally or vertically oriented line lasers. Further shown is the controller 22, the main body 11, the driving wheels 12, 13, and the rotatable brush roll 17 previously discussed with reference to Figure 1a. The controller 22 is operatively coupled to the camera 23 for recording images of a vicinity of the robotic cleaning device 10. The first and second line lasers 27, 28 may preferably be vertical line lasers and are arranged lateral of the camera 23 and configured to illuminate a height and a width that is greater than the height and width of the robotic cleaning device 10. Further, the angle of the field of view of the camera 23 is preferably smaller than the space illuminated by the first and second line lasers 27, 28. The camera 23 is controlled by the controller 22 to capture and record a plurality of images per second. Data from the images is extracted by the controller 22 and the data is typically saved in the memory 26 along with the computer program 25.

The first and second line lasers 27, 28 are typically arranged on a respective side of the camera 23 along an axis being perpendicular to an optical axis of the camera. Further, the line lasers 27, 28 are directed such that their respective laser beams intersect within the field of view of the camera 23. Typically, the intersection coincides with the optical axis of the camera 23.

The first and second line laser 27, 28 are configured to scan, preferably in a vertical orientation, the vicinity of the robotic cleaning device 10, normally in the direction of movement of the robotic cleaning device 10. The first and second line lasers 27, 28 are configured to send out laser beams, which illuminate furniture, walls and other objects of e.g. a room to be cleaned. The camera 23 is controlled by the controller 22 to capture and record images from which the controller 22 creates a representation or layout of the surroundings that the robotic cleaning device 10 is operating in, by extracting features from the images and by measuring the distance covered by the robotic cleaning device 10, while the robotic cleaning device 10 is moving across the surface to be cleaned. Thus, the controller 22 derives positional data of the robotic cleaning device 10 with respect to the surface to be cleaned from the recorded images, generates a 3D representation of the surroundings from the derived positional data and controls the driving motors 15, 16 to move the robotic cleaning device across the surface to be cleaned in accordance with the generated 3D representation and navigation information supplied to the robotic cleaning device 10 such that the surface to be cleaned can be navigated by taking into account the generated 3D representation. Since the derived positional data will serve as a foundation for the navigation of the robotic cleaning device, it is important that the positioning is correct; the robotic device will otherwise navigate according to a "map" of its surroundings that is misleading.

The 3D representation generated from the images recorded by the 3D sensor system thus facilitates detection of obstacles in the form of walls, floor lamps, table legs, around which the robotic cleaning device must navigate as well as rugs, carpets, doorsteps, etc., that the robotic cleaning device 10 must traverse. The robotic cleaning device 10 is hence configured to learn about its environment or surroundings by operating/cleaning.

Hence, the 3D sensor system comprising the camera 23 and the first and second vertical line lasers 27, 28 is arranged to record images of a vicinity of the robotic cleaning from which objects/obstacles may be detected. The controller 22 is capable of positioning the robotic cleaning device 10 with respect to the detected obstacles and hence a surface to be cleaned by deriving positional data from the recorded images. From the positioning, the controller 22 controls movement of the robotic cleaning device 10 by means of controlling the wheels 12, 13 via the wheel drive motors 15, 16, across the surface to be cleaned.

The derived positional data facilitates control of the movement of the robotic cleaning device 10 such that cleaning device can be navigated to move very close to an object, and to move closely around the object to remove debris from the surface on which the object is located. Hence, the derived positional data is utilized to move flush against the object, being e.g. a thick rug or a wall. Typically, the controller 22 continuously generates and transfers control signals to the drive wheels 12, 13 via the drive motors 15, 16 such that the robotic cleaning device 10 is navigated close to the object.

Now, with reference to Figures 1 and 2, it can be deducted that the autonomously operating robotic cleaning device 10 is a highly sophisticated and complex device, requiring an advanced navigation system for moving over the surface to be cleaned. As previously has been discussed, it may be desirable to complement the robotic cleaning device 10, in the following being referred to as the "master" robotic cleaning device, with one or more less complex supporting or assisting robotic cleaning devices, in the following referred to as "slave" robotic cleaning devices.

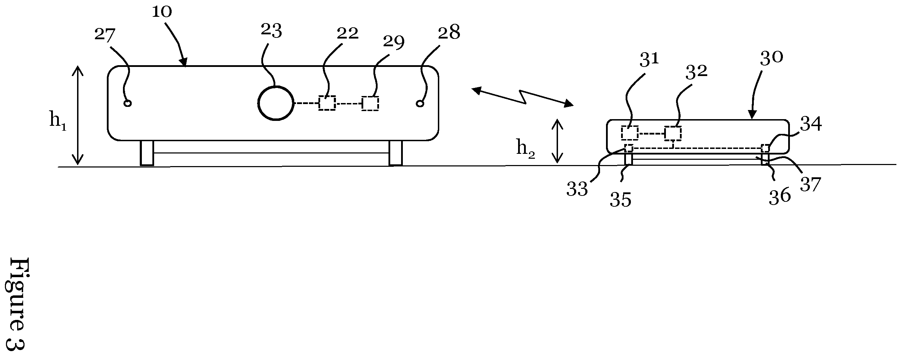

With reference to Figure 3, in an embodiment of the invention, a system of robotic cleaning devices is thus provided comprising the master robotic cleaning device 10 as described with reference to Figures 1 and 2 and at least one slave robotic cleaning device 30, where the master robotic cleaning device is capable of wirelessly controlling a cleaning operation of the slave robotic cleaning device 30.

In Figure 3, it is illustrated that the master robot 10 has a height *h₁* while the slave robot 30 has a height *h₂.* Assuming for instance that the surface to be cleaned accommodates objects such as sofas, armchairs, bureaus, etc., having a clearance height *h* (i.e. distance from the floor up to an under side of the object) being less than h₁ but greater than h₂.

Thus, for objects having a clearance height less than h₁, the master robot cannot pass under for performing a cleaning operation. Without a system such as that shown in Figure 3 illustrating an embodiment of the invention, the user will have to use for instance a broom or an ordinary vacuum cleaner to clean a surface below these objects.

Advantageously, in the embodiment illustrated with reference to Figure 3, the master robot 10 instructs the slave robot 30, by submitting wireless control signals via the communication interface 29 to a corresponding communication interface 31 of the slave robot 30, to clean the surfaces under the objects having a clearance height less than h₁, as detected by the obstacle detecting device of the master robotic cleaning device 10. As previously has been discussed with reference to Figure 2, the obstacle detection device (exemplified by the 3D sensor system comprising the camera 23 and the first and second line laser 27, 28 in Figure 2) is arranged to detect obstacles surrounding the master robot 10, and the controller of the master robot 10 uses positional data derived from the obstacle detection device to position itself with respect to the surroundings, which also includes positioning the master robotic device 10 in relation to the slave robotic device 30 (being an "obstacle" in the surroundings of the master robot 10).

As in the case of the master robot 10, the slave robot 30 comprises a controller 30 configured to control a propulsion system comprising driving means in the form of e.g. two electric wheel motors 33, 34 for enabling movement of the driving wheels 35, 36 (or any other appropriate movement means) such that the slave cleaning device 30 can be moved over a surface to be cleaned, such as the surfaces under the furniture which the master robot 10 cannot reach. In this particular example, the slave robot 30 further comprises a cleaning member in the form of a rotatable brush roll 37 for more effectively removing debris from the surface to be cleaned.

With the system of cleaning robots according to embodiments of the present invention, the slave robot 30 is advantageously not required to be equipped with the same sophisticated obstacle detecting device (embodied in Figure 3 by the 3D sensor system comprising the camera 23 and the two line lasers 27, 28) as the master robot 10. Consequently, since the slave robot 30 is instructed by the master robot 10 how to navigate over the surface to be cleaned (based on positional data derived by the controller 22 of the master robot 10 from the obstacle detection device as previously described), a less powerful controller 32 can be used. Hence, the slave robot 30 can advantageously be made much less complex than the master robot 10, with a correspondingly great reduction in cost.

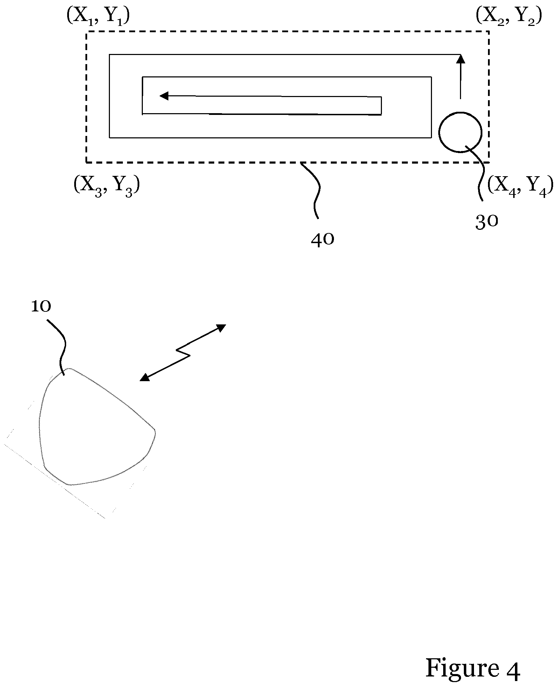

Figure 4 illustrates, in a top view, the cleaning operation of the slave robotic device 30 as discussed with reference to the embodiment illustrated in Figure 3. Hence, the master robotic device 10 communicates to the slave robotic device 30 a command indicating a surface 40 over which the at least one slave robotic cleaning device 30 is instructed to move and clean, for instance a surface located under a sofa having a clearance height less than h₁. The command may e.g. indicate the coordinates delimiting the surface 40; in Figure 4 denoted (X₁, Y₁), (X₂, Y₂), (X₃, Y₁). Alternatively, the command may include control data for the slave robot propulsion system in order to guide the slave robotic device 30 over the surface to be cleaned. Upon receiving the command from the master robot 10, the slave robot 30 moves to, and cleans, the surface 40. The slave robot 40 works the surface 40 in a pattern as indicated by the arrows, thus cleaning the surface 40. The slave robot is indicated in Figure 4 to have a cylindrically shaped main body; this is exemplifying only, and the slave robot 30 may have any appropriate shape.

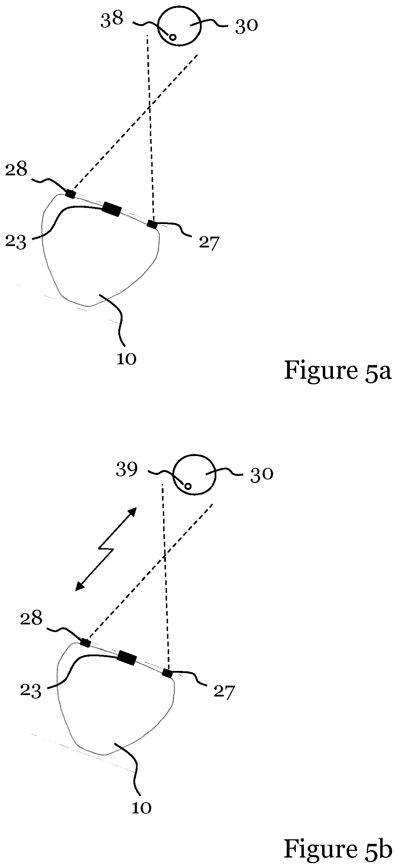

Figure 5a illustrates an embodiment of the invention where the master robotic cleaning device 10 positions itself in relation to the slave robotic cleaning device 30. Now, in order to facilitate the detection of the slave robot 30 for the master robot 10, the slave robot is equipped with one or more light sources 38, such as light emitting diodes (LEDs), and/or luminous reflectors detectable by the master robot 10.

Thus, the master robot 10 emits light by means of its laser light sources 27, 28 onto the slave robot 30 and the camera 23 records images of a vicinity of the master robotic cleaning device 10 from which the slave robot 10 may be detected. Thereafter, the master robot 10 derives positional data of the detected objects from the recorded images, and positons itself in relation to the objects, including the slave robot 30.

Figure 5b illustrates a further embodiment of the invention where the master robotic cleaning device 10 positions itself in relation to the slave robotic cleaning device 30. Now, in order to facilitate the detection of the slave robot 30 for the master robot 10, the slave robot is in this embodiment equipped with an optical detector 39 configured to detect light emitted by the laser light sources 27, 28 of the master robot 10 onto the slave robot 30.

Upon detecting the laser light emitted by the master robot 10, the slave robot 30 communicates via its communication interface to the master robot 10 that the laser light is detected. As previously has been discussed, the interface may communicate via e.g. IR, ultrasonic or RF signals (possibly utilizing WLAN technology).

In this way, the master robot 10 is able of detecting - and positioning itself in relation to - the slave robot 30 using for instance SLAM.

Further advantageous is that, by having the slave robot 30 detected light emitted by the line lasers 27, 28 of the master robot 10, and instantly communicate that the light that has been detected at the optical detector 39, an operational clock of the master and the slave, respectively, can be synchronized to each other. Hence, any clock drift may be eliminated, which facilitates system navigation. It should be noted that the embodiments of the invention illustrated in Figures 5a and b can be combined; the slave robot 10 may thus comprise both LEDs 38 and an optical detector 39.

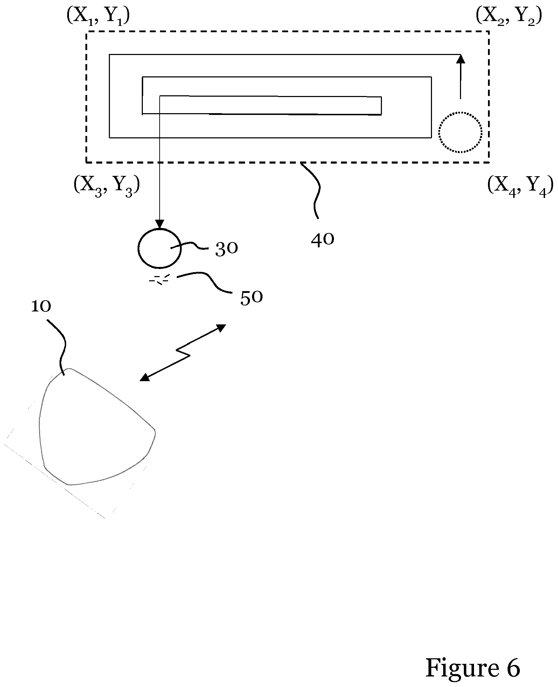

Figure 6 illustrates, again in a top view, a further embodiment of the invention where, the master robotic device 10 communicates to the slave robotic device 30 a command indicating a surface 40 over which the at least one slave robotic cleaning device 30 is instructed to move. Again, the command may e.g. indicate the coordinates delimiting the surface 40; in Figure 6 denoted (X₁, Y₁), (X₂, Y₂), (X₃, Y₁). Upon receiving the command from the master robot 10, the slave robot 30 moves to the surface 40. However, in this particular embodiment, the slave robotic cleaning device 30 will itself not vacuum clean the surface 40. Instead, the slave robotic cleaning device 30 works the surface 40 in the pattern as indicated by the arrows by pushing the debris in from of it, for instance with the aid of a cleaning member in the form of a brush. The slave robot 30 will at the end of the cleaning operation leave any collected debris 50 outside of the surface 40 where the master robot 10 can reach and remove the debris 50.

This embodiment is advantageous since there is no need to equip the slave robot 30 with a dust container or suction fan, thereby facilitating an even less complex - and less noisy - slave robot 30. Further, with this embodiment, the slave robot is advantageously more or less maintenance-free, as there is no need to empty a dust container. A user will only occasionally have to remove debris that is stuck to the cleaning member of the slave robot 10.

Again with reference to Figure 6, in yet another embodiment, the commands submitted by the master robotic cleaning device 10 comprises data indicating a time of day or night at which the slave robotic cleaning device 30 is instructed to perform the cleaning operation. For instance, the slave robot may advantageously be instructed to work a particular surface during night time, when no obstacles in the form of humans and animals will impede the slave robot 30. This is particularly advantageous in case the slave robot is not equipped with components such as a suction fan and/or a rotatable brush, in which the case the slave robot is relatively silent. In the morning, when the slave robot 30 has gathered debris, the master robot 10 will vacuum clean the debris from the place where the slave robot 30 did gather the debris.

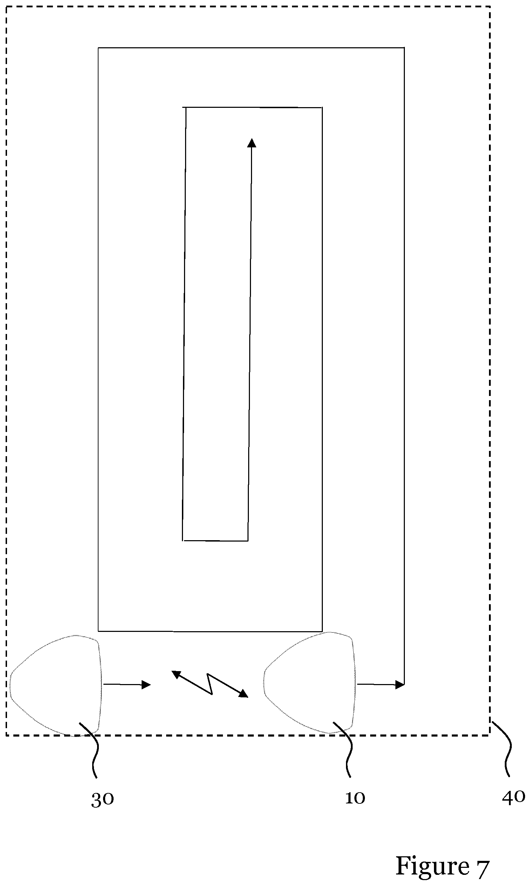

Figure 7 illustrates yet a further embodiment of the present invention, where the master robotic cleaning device 10 and the slave robotic cleaning device 30 perform different types of cleaning operations. In this particular embodiment, the master robot 10 is a vacuum cleaner while the slave robot 30 is a floor washer. Thus, as the master robotic vacuum cleaner 10 sets out to vacuum clean the surface 40, it instructs the slave robotic floor sweeper 30 to perform its cleaning operation by sending commands indicating the position of the surface 40 to be cleaned as previously discussed. The slave robotic floor washer 30 can thus be operated to follow the master robotic vacuum cleaner 10 to advantageously perform the complementing cleaning operation of washing the floor as represented by the surface 40.

In the exemplifying embodiment of Figure 7, the main body of the slave robotic floor washer 30 has the same shape as that of the master robotic vacuum cleaner 10. However, as previously discussed, in terms of intelligence, it can advantageously be made substantially less complex than the master robot 10. In case the slave robot 10 is embodied in the form of a robotic washer, its cleaning member typically comprises a swab component such as a mop.

In an embodiment of the invention, the commands submitted from the master robotic cleaning device 10 to the slave robotic cleaning device 30 comprises an instruction to the slave robotic cleaning device 30 to return to its charger (not shown) after the cleaning operation has been performed.

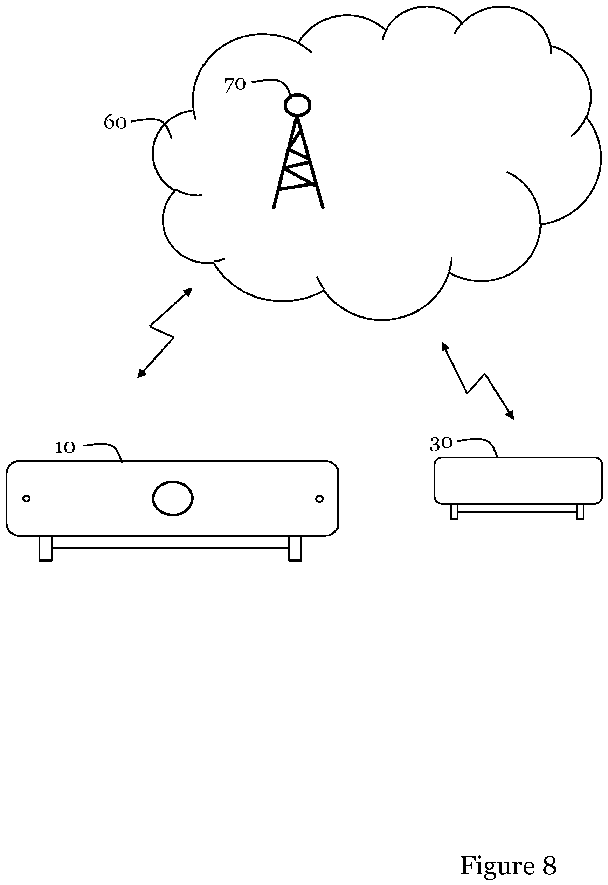

Figure 8 shows yet a further embodiment of the invention, where the communication between the master robotic cleaning device 10 and the slave robotic cleaning device 30 is not performed via line-of sight-communication, but via a network such as a Wireless Local Area Network 60 (WLAN), commonly referred to as "WiFi". Thus, the master robot 10 and the slave robot 30 connects to the WLAN 60 via a so called Access Point (AP) 31 such as e.g. a home router for wireless WiFi communication, whereupon instructions can be submitted from the master robotic cleaning device 10 to the slave robotic cleaning device 30, in order for the slave robot to perform a desired cleaning operation.

Advantageously, by communicating via a WLAN, the master robot 10 and the slave robot 30 can be located on a great distance from each other, such as on different floors in a building but still being capable of communicating with each other.

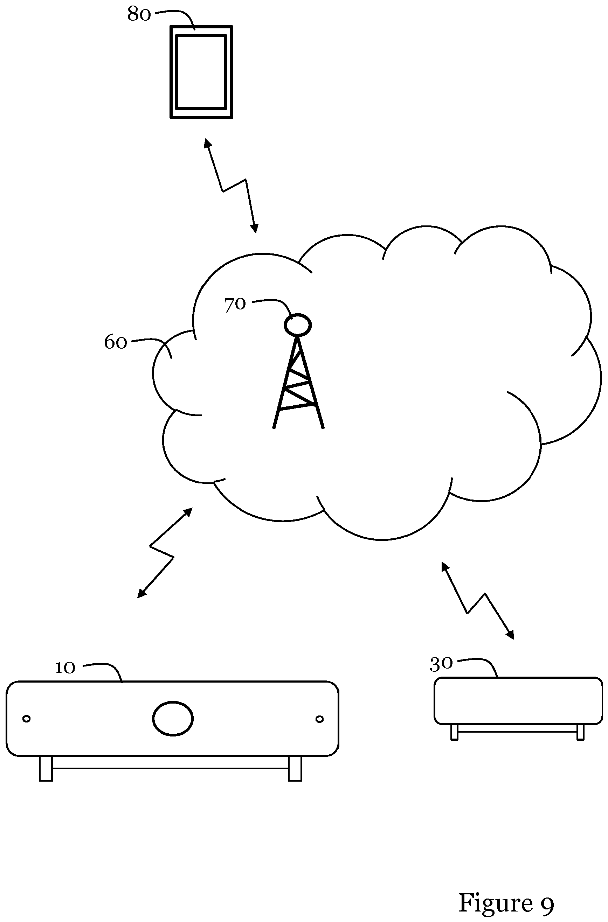

Figure 9 illustrates still a further embodiment of the present invention, where the master robot 10 is arranged to communicate wirelessly, for example via Bluetooth or the WLAN 60, with a mobile terminal 80 (such as a smart phone, a tablet, a laptop, etc.) of a user wishing to control the cleaning operation of the slave robot 30. The user may communicate with the master robot 10 via a particular app downloaded to the mobile terminal 80. Hence, the user may advantageously instruct the master robot 10 regarding a desired cleaning operation to be performed by the slave robot 30, whereupon the master robot 10 sends commands accordingly to the slave robot 10 via its communication interface.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A system of robotic cleaning devices (10, 30) comprising:
a master robotic cleaning device (10); and
at least one slave robotic cleaning device (30);
the master robotic cleaning device (10) comprising:
a propulsion system (12, 13, 15, 16), comprising driving means in the form of two electric wheel motors (15,16) for enabling movement of the driving wheels (12,13), arranged to move the master robotic cleaning device (10);
a cleaning member (17) arranged to remove debris from a surface to be cleaned;
an obstacle detection device (23, 27, 28) arranged to detect obstacles;
a controller (22) arranged to position the robotic cleaning device (10) with respect to the detected obstacles from positional data derived from the obstacle detection device, and further to control the propulsion system to move the master robotic cleaning device (10) based on the positional data; and
a wireless communication interface (29) via which the master robotic cleaning device (10) is arranged to submit commands *to* the at least one slave robotic cleaning device (30) to control a cleaning operation of the at least one slave robotic cleaning device (30), the commands being based on the derived positional data;
the at least one slave robotic cleaning device (30) comprising:
a propulsion system (33,34, 35, 36) arranged to move the slave robotic cleaning device (30);
a cleaning member (37) arranged to remove debris from a surface to be cleaned;
a wireless communication interface (31) via which the slave robotic cleaning device (30) is arranged to receive the commands submitted by the master robotic cleaning device (10); and
a controller (32) arranged to control the cleaning operation of the slave robotic cleaning device (30) as indicated by the received commands.

2. The system of claim 1, wherein:
the commands submitted by the master robotic cleaning device (10) comprises data indicating a surface (40) over which the at least one slave robotic cleaning device (30) is instructed to move; and
the controller (32) of the at least one slave robotic cleaning device (30) further is arranged to control the propulsion system (33, 34, 35, 36) to move the slave robotic cleaning device (30) over the surface (40) as indicated by the commands communicated by the master robotic cleaning device (10).

3. The system of claims 1 or 2, wherein:
the commands submitted by the master robotic cleaning device (10) comprises data indicating a time at which the at least one slave robotic cleaning device (30) is instructed to perform the cleaning operation; and
the controller (32) of the at least one slave robotic cleaning device (30) further is arranged to control the slave robotic cleaning device (30) to perform the cleaning operation at the time indicated by the commands communicated by the master robotic cleaning device (10).

4. The system of any one of the preceding claims, wherein:
the commands submitted by the master robotic cleaning device (10) comprises an instruction to the at least one slave robotic cleaning device (30) to return to its charger after the cleaning operation has been performed; and
the controller (32) of the at least one slave robotic cleaning device (30) further is arranged to control the propulsion system (33, 34, 35, 36) to move the slave robotic cleaning device (30) to the charger after the cleaning operation has been performed.

5. The system of any one of the preceding claims, wherein:
the at least one slave robotic cleaning device (30) is arranged to remove debris from a surface to be cleaned and gather the debris for subsequent pick-up by the master robotic cleaning device (10).

6. The system of any one of the preceding claims, wherein the master robotic cleaning device (10) and the at least one slave robotic cleaning device (30) are selected from a group comprising a robotic vacuum cleaner, a robotic sweeper, and a robotic washer.

7. The system of claim 6, the master robotic cleaning device (10) and the at least one slave robotic cleaning device (30) being selected to be of different types in said group.

8. The system of any one of the preceding claims, wherein:
the wireless communication interface (29) of the master robotic cleaning device (10) is configured to communicate with the wireless communication interface (31) of the at least one slave robotic cleaning device (30) via a Wireless Local Area Network (60), WLAN.

9. The system of any one of the preceding claims, wherein:
the wireless communication interface (29) of the master robotic cleaning device (10) is configured to wirelessly receive instructions from a mobile terminal (80), wherein the commands submitted to the at least one slave robotic cleaning device (30) to control a cleaning operation of the at least one slave robotic cleaning device (30) is based on the instructions received from the mobile terminal (80).

10. The system of any one of the preceding claims, wherein:
the at least one slave robotic cleaning device (30) comprises one or more light sources (38) or luminous reflectors arranged to be detectable by the obstacle detection device (23, 27, 28) of the master robotic cleaning device (10).

11. The system of any one of the preceding claims, wherein:
the at least one slave robotic cleaning device (30) comprises at least one optical detector arranged to detect light emitted by the obstacle detection device (23, 27, 28) of the master robotic cleaning device (10); and
the at least one slave robotic cleaning device (30) is configured to communicate to the master robotic cleaning device (10), via its wireless communication interface (31), an indication that the light emitted is detected by the optical detector.

12. The system of claim 11, wherein:
the controller (22) of the master robotic cleaning device (10) is configured to synchronize an operational clock of the master robotic cleaning device with an operational clock of the at least one slave robotic cleaning device based on the indication that the light emitted is detected by the optical detector (39).

13. A method performed by a master robotic cleaning device (10) comprising a propulsion system comprising driving means in the form of two electric motors (15, 16) for enabling movement of driving wheels (12, 13), of controlling at least one slave robotic cleaning device (30), comprising:
detecting (S101) obstacles;
deriving (S102) positional data from the detection of obstacles;
positioning (S103) the master robotic cleaning device (10) with respect to the detected obstacles from the derived positional data;
controlling (S104) movement of the master robotic cleaning device (10) based on the positional data; and
submitting (S105) commands to the at least one slave robotic cleaning device (30) to control a cleaning operation of said at least one slave robotic cleaning device (30), the commands being based on the derived positional data, wherein the cleaning operation of the slave robotic cleaning device (30) is controlled as indicated by the submitted commands.

14. The method of claim 13, wherein the commands submitted by the master robotic cleaning device (10) comprises data indicating a surface (40) over which the at least one slave robotic cleaning device (30) is instructed to move.

15. The method of claims 13 or 14, wherein the commands submitted by the master robotic cleaning device (10) comprises data indicating a time at which the at least one slave robotic cleaning device (30) is instructed to perform the cleaning operation.

16. The method of any one of claims 13-15, wherein the commands submitted by the master robotic cleaning device (10) comprises an instruction to the at least one slave robotic cleaning device (30) to return to its charger after the cleaning operation has been performed.

17. The method of any one of claims 13-16, wherein the commands submitted by the master robotic cleaning device (10) comprises an instruction to the at least one slave robotic cleaning device (30) to remove debris from a surface to be cleaned and gather the debris for subsequent pick-up by the master robotic cleaning device (10).

18. A computer program (25) comprising computer-executable instructions for causing a master robotic cleaning device (10) to perform the steps recited in any one of claims 13-17 when the computer-executable instructions are executed on a processing unit (22) included in the device.

19. A computer program product comprising a computer readable medium (26), the computer readable medium having the computer program (25) according to claim 18 embodied thereon.

## Patentansprüche

1. System von Roboterreinigungsvorrichtungen (10, 30), das Folgendes umfasst:
eine Master-Roboterreinigungsvorrichtung (10); und
mindestens eine Slave-Roboterreinigungsvorrichtung (30) ;
wobei die Master-Roboterreinigungsvorrichtung (10) Folgendes umfasst:
ein Vortriebssystem (12, 13, 15, 16), das Antriebsmittel in der Form zweier Radelektromotoren (15, 16) zum Ermöglichen einer Bewegung der Antriebsräder (12, 13) umfasst, das ausgelegt ist, die Master-Roboterreinigungsvorrichtung (10) zu bewegen;
ein Reinigungselement (17), das ausgelegt ist, Staub von einer zu reinigenden Fläche zu entfernen;
eine Hindernisdetektionsvorrichtung (23, 27, 28), die ausgelegt ist, Hindernisse zu detektieren;
eine Steuereinrichtung (22), die ausgelegt ist, die Roboterreinigungsvorrichtung (10) mittels Positionsdaten, die von der Hindernisdetektionsvorrichtung abgeleitet werden, in Bezug auf die detektierten Hindernisse zu positionieren und ferner das Vortriebssystem derart zu steuern, dass die Master-Roboterreinigungsvorrichtung (10) auf der Grundlage der Positionsdaten bewegt wird; und
eine Drahtloskommunikationsschnittstelle (29), wobei die Master-Roboterreinigungsvorrichtung (10) ausgelegt ist, über diese Befehle an die mindestens eine Slave-Roboterreinigungsvorrichtung (30) auszugeben, um einen Reinigungsvorgang der mindestens einen Slave-Roboterreinigungsvorrichtung (30) zu steuern, wobei die Befehle auf den abgeleiteten Positionsdaten beruhen;
wobei die mindestens eine Slave-Roboterreinigungsvorrichtung (30) Folgendes umfasst:
ein Vortriebsystem (33, 34, 35, 36), das ausgelegt ist, die Slave-Roboterreinigungsvorrichtung (30) zu bewegen;
ein Reinigungselement (37), das ausgelegt ist, Staub von einer zu reinigenden Fläche zu entfernen;
eine Drahtloskommunikationsschnittstelle (31), wobei die Slave-Roboterreinigungsvorrichtung (30) ausgelegt ist, über diese die Befehle zu empfangen, die durch die Master-Roboterreinigungsvorrichtung (10) ausgegeben werden; und
eine Steuereinrichtung (32), die ausgelegt ist, den Reinigungsvorgang der Slave-Roboterreinigungsvorrichtung (30) wie durch die empfangenen Befehle angegeben zu steuern.

2. System nach Anspruch 1, wobei:
die Befehle, die durch die Master-Roboterreinigungsvorrichtung (10) ausgegeben werden, Daten umfassen, die eine Fläche (40) angeben, wobei die mindestens eine Slave-Roboterreinigungsvorrichtung (30) angewiesen wird, sich über diese zu bewegen; und
die Steuereinrichtung (32) der mindestens einen Slave-Roboterreinigungsvorrichtung (30) ferner ausgelegt ist, das Vortriebssystem (33, 34, 35, 36) derart zu steuern, dass die Slave-Roboterreinigungsvorrichtung (30) über die Fläche (40) bewegt wird, die durch die Befehle angegeben wird, die durch die Master-Roboterreinigungsvorrichtung (10) kommuniziert werden.

3. System nach Anspruch 1 oder 2, wobei:
die Befehle, die durch die Master-Roboterreinigungsvorrichtung (10) ausgegeben werden, Daten umfassen, die eine Zeit angeben, wobei die mindestens eine Slave-Roboterreinigungsvorrichtung (30) angewiesen wird, den Reinigungsvorgang zu dieser Zeit durchzuführen; und
die Steuereinrichtung (32) der mindestens einen Slave-Roboterreinigungsvorrichtung (30) ferner ausgelegt ist, die Slave-Roboterreinigungsvorrichtung (30) derart zu steuern, dass der Reinigungsvorgang zu der Zeit durchgeführt wird, die durch die Befehle angegeben wird, die durch die Master-Roboterreinigungsvorrichtung (10) kommuniziert werden.

4. System nach einem der vorhergehenden Ansprüche, wobei:
die Befehle, die durch die Master-Roboterreinigungsvorrichtung (10) ausgegeben werden, eine Anweisung an die mindestens eine Slave-Roboterreinigungsvorrichtung (30), zu ihrer Ladestation zurückzukehren, nachdem der Reinigungsvorgang durchgeführt worden ist, umfassen; und
die Steuereinrichtung (32) der mindestens einen Slave-Roboterreinigungsvorrichtung (30) ferner ausgelegt ist, das Vortriebssystem (33, 34, 35, 36) derart zu steuern, dass die Slave-Roboterreinigungsvorrichtung (30) zur Ladestation bewegt wird, nachdem der Reinigungsvorgang durchgeführt worden ist.

5. System nach einem der vorhergehenden Ansprüche, wobei:
die mindestens eine Slave-Roboterreinigungsvorrichtung (30) ausgelegt ist, Staub von einer zu reinigenden Fläche zu entfernen und den Staub zur anschließenden Aufnahme durch die Master-Roboterreinigungsvorrichtung (10) zu sammeln.

6. System nach einem der vorhergehenden Ansprüche, wobei die Master-Roboterreinigungsvorrichtung (10) und die mindestens eine Slave-Roboterreinigungsvorrichtung (30) aus einer Gruppe ausgewählt sind, die einen Roboterstaubsauger, eine Roboterkehrmaschine und eine Roboternasswischeinrichtung umfasst.

7. System nach Anspruch 6, wobei die Master-Roboterreinigungsvorrichtung (10) und die mindestens eine Slave-Roboterreinigungsvorrichtung (30) derart ausgewählt sind, dass sie verschiedene Typen aus der Gruppe sind.

8. System nach einem der vorhergehenden Ansprüche, wobei:
die Drahtloskommunikationsschnittstelle (29) der Master-Roboterreinigungsvorrichtung (10) konfiguriert ist, über ein drahtloses Nahbereichsnetz, WLAN, (60) mit der Drahtloskommunikationsschnittstelle (31) der mindestens einen Slave-Roboterreinigungsvorrichtung (30) zu kommunizieren.

9. System nach einem der vorhergehenden Ansprüche, wobei:
die Drahtloskommunikationsschnittstelle (29) der Master-Roboterreinigungsvorrichtung (10) konfiguriert ist, von einem mobilen Endgerät (80) drahtlos Anweisungen zu empfangen, wobei die Befehle, die an die mindestens eine Slave-Roboterreinigungsvorrichtung (30) ausgegeben werden, um einen Reinigungsvorgang der mindestens einen Slave-Roboterreinigungsvorrichtung (30) zu steuern, auf den Anweisungen beruhen, die von dem mobilen Endgerät (80) empfangen werden.

10. System nach einem der vorhergehenden Ansprüche, wobei:
die mindestens eine Slave-Roboterreinigungsvorrichtung (30) eine oder mehrere Lichtquellen (38) oder Lichtreflektoren umfasst, die ausgelegt sind, durch die Hindernisdetektionsvorrichtung (23, 27, 28) der Master-Roboterreinigungsvorrichtung (10) detektierbar zu sein.

11. System nach einem der vorhergehenden Ansprüche, wobei:
die mindestens eine Slave-Roboterreinigungsvorrichtung (30) mindestens einen optischen Detektor umfasst, der ausgelegt ist, Licht zu detektieren, das durch die Hindernisdetektionsvorrichtung (23, 27, 28) der Master-Roboterreinigungsvorrichtung (10) emittiert wird; und
die mindestens eine Slave-Roboterreinigungsvorrichtung (30) konfiguriert ist, über ihre Drahtloskommunikationsschnittstelle (31) eine Angabe, dass das emittierte Licht durch den optischen Detektor detektiert wird, an die Master-Roboterreinigungsvorrichtung (10) zu kommunizieren.

12. System nach Anspruch 11, wobei:
die Steuereinrichtung (22) der Master-Roboterreinigungsvorrichtung (10) konfiguriert ist, auf der Grundlage der Angabe, dass das emittierte Licht durch den optischen Detektor (39) detektiert wird, einen Arbeitstakt der Master-Roboterreinigungsvorrichtung mit einem Arbeitstakt der mindestens einen Slave-Roboterreinigungsvorrichtung zu synchronisieren.

13. Verfahren, das durch eine Master-Roboterreinigungsvorrichtung (10) durchgeführt wird, die ein Vortriebssystem umfasst, das Antriebsmittel in der Form zweier Elektromotoren (15, 16) zum Ermöglichen einer Bewegung der Antriebsräder (12, 13) umfasst, des Steuerns mindestens einer Slave-Roboterreinigungsvorrichtung (30), das Folgendes umfasst:
Detektieren (S101) von Hindernissen;
Ableiten (S102) von Positionsdaten aus der Detektion von Hindernissen;
Positionieren (S103) der Master-Roboterreinigungsvorrichtung (10) in Bezug auf die detektierten Hindernisse mittels der abgeleiteten Positionsdaten;
Steuern (S104) einer Bewegung der Master-Roboterreinigungsvorrichtung (10) auf der Grundlage der Positionsdaten; und
Ausgeben (S105) von Befehlen an die mindestens eine Slave-Roboterreinigungsvorrichtung (30), um einen Reinigungsvorgang der mindestens einen Slave-Roboterreinigungsvorrichtung (30) zu steuern, wobei die Befehle auf den abgeleiteten Positionsdaten beruhen, wobei der Reinigungsvorgang der Slave-Roboterreinigungsvorrichtung (30) wie durch die ausgegebenen Befehle angegeben gesteuert wird.

14. Verfahren nach Anspruch 13, wobei die Befehle, die durch die Master-Roboterreinigungsvorrichtung (10) ausgegeben werden, Daten umfassen, die eine Fläche (40) angeben, wobei die mindestens eine Slave-Roboterreinigungsvorrichtung (30) angewiesen wird, sich über diese zu bewegen.

15. Verfahren nach Anspruch 13 oder 14, wobei die Befehle, die durch die Master-Roboterreinigungsvorrichtung (10) ausgegeben werden, Daten umfassen, die eine Zeit angeben, wobei die mindestens eine Slave-Roboterreinigungsvorrichtung (30) angewiesen wird, den Reinigungsvorgang zu dieser Zeit durchzuführen.

16. Verfahren nach einem der Ansprüche 13-15, wobei die Befehle, die durch die Master-Roboterreinigungsvorrichtung (10) ausgegeben werden, eine Anweisung an die mindestens eine Slave-Roboterreinigungsvorrichtung (30), zu ihrer Ladestation zurückzukehren, nachdem der Reinigungsvorgang durchgeführt worden ist, umfassen.

17. Verfahren nach einem der Ansprüche 13-16, wobei die Befehle, die durch die Master-Roboterreinigungsvorrichtung (10) ausgegeben werden, eine Anweisung an die mindestens eine Slave-Roboterreinigungsvorrichtung (30), Staub von einer zu reinigenden Fläche zu entfernen und den Staub zur anschließenden Aufnahme durch die Master-Roboterreinigungsvorrichtung (10) zu sammeln, umfassen.

18. Computerprogramm (25), das computerausführbare Anweisungen zum Bewirken, dass eine Master-Roboterreinigungsvorrichtung (10) die Schritte nach einem der Ansprüche 13-17 durchführt, wenn die computerausführbaren Anweisungen auf einer Verarbeitungseinheit (22) ausgeführt werden, die in der Vorrichtung enthalten ist, umfasst.

19. Computerprogrammprodukt, das ein computerlesbares Medium (26) umfasst, wobei das computerlesbare Medium das Computerprogramm (25) nach Anspruch 18 darauf ausgeführt aufweist.

## Revendications

1. Système de dispositifs de nettoyage robotisés (10, 30), comprenant :
un dispositif de nettoyage robotisé maître (10) ; et
au moins un dispositif de nettoyage robotisé esclave (30) ;
le dispositif de nettoyage robotisé maître (10) comprenant :
un système de propulsion (12, 13, 15, 16), comprenant des moyens d'entraînement prenant la forme de moteurs de roue électriques (15, 16) destinés à permettre le mouvement des roues motrices (12, 13) conçues pour déplacer le dispositif de nettoyage robotisé maître (10) ;
un organe de nettoyage (17) conçu pour enlever des débris d'une surface à nettoyer ;
un dispositif de détection d'obstacles (23, 27, 28) conçu pour détecter des obstacles ;
une unité de commande (22) conçue pour positionner le dispositif de nettoyage robotisé (10) par rapport aux obstacles détectés à partir de données de position obtenues auprès du dispositif de détection d'obstacles, et en outre pour commander au système de propulsion de déplacer le dispositif de nettoyage robotisé maître (10) sur la base des données de position ; et
une interface de communication sans fil (29) par le biais de laquelle le dispositif de nettoyage robotisé maître (10) est conçu pour soumettre des commandes à l'au moins un dispositif de nettoyage robotisé esclave (30) pour commander une opération de nettoyage de l'au moins un dispositif de nettoyage robotisé esclave (30), les commandes étant basées sur les données de position obtenues ;
l'au moins un dispositif de nettoyage robotisé esclave (30) comprenant :
un système de propulsion (33, 34, 35, 36) conçu pour déplacer le dispositif de nettoyage robotisé esclave (30) ;
un organe de nettoyage (37) conçu pour enlever des débris d'une surface à nettoyer ;
une interface de communication sans fil (31) par le biais de laquelle le dispositif de nettoyage robotisé esclave (30) est conçu pour recevoir les commandes soumises par le dispositif de nettoyage robotisé maître (10) ; et
une unité de commande (32) conçue pour commander l'opération de nettoyage du dispositif de nettoyage robotisé esclave (30) ainsi qu'indiqué par les commandes reçues.

2. Système selon la revendication 1, dans lequel :
les commandes soumises par le dispositif de nettoyage robotisé maître (10) comprennent des données indiquant une surface (40) sur laquelle l'au moins un dispositif de nettoyage robotisé esclave (30) a pour instruction de se déplacer ; et
l'unité de commande (32) de l'au moins un dispositif de nettoyage robotisé esclave (30) est en outre conçue pour commander au système de propulsion (33, 34, 35, 36) de déplacer le dispositif de nettoyage robotisé esclave (30) sur la surface (40) ainsi qu'indiqué par les commandes communiquées par le dispositif de nettoyage robotisé maître (10).

3. Système selon les revendications 1 ou 2, dans lequel :
les commandes soumises par le dispositif de nettoyage robotisé maître (10) comprennent des données indiquant une heure à laquelle l'au moins un dispositif de nettoyage robotisé esclave (30) a pour instruction de réaliser l'opération de nettoyage ; et
l'unité de commande (32) de l'au moins un dispositif de nettoyage robotisé esclave (30) est en outre conçue pour commander au dispositif de nettoyage robotisé esclave (30) de réaliser l'opération de nettoyage à l'heure indiquée par les commandes communiquées par le dispositif de nettoyage robotisé maître (10).

4. Système selon l'une quelconque des revendications précédentes, dans lequel :
les commandes soumises par le dispositif de nettoyage robotisé maître (10) comprennent une instruction donnée à l'au moins un dispositif de nettoyage robotisé esclave (30) de retourner à son chargeur après que l'opération de nettoyage a été réalisée ; et
l'unité de commande (32) de l'au moins un dispositif de nettoyage robotisé esclave (30) est en outre conçue pour commander au système de propulsion (33, 34, 35, 36) de déplacer le dispositif de nettoyage robotisé esclave (30) jusqu'au chargeur après que l'opération de nettoyage a été réalisée.

5. Système selon l'une quelconque des revendications précédentes, dans lequel :
l'au moins un dispositif de nettoyage robotisé esclave (30) est conçu pour enlever des débris d'une surface à nettoyer et rassembler les débris en vue de leur ramassage ultérieur par le dispositif de nettoyage robotisé maître (10).

6. Système selon l'une quelconque des revendications précédentes, dans lequel le dispositif de nettoyage robotisé maître (10) et l'au moins un dispositif de nettoyage robotisé esclave (30) sont sélectionnés dans un groupe comprenant un aspirateur robotisé, un balayeur robotisé et un laveur robotisé.

7. Système selon la revendication 6, le dispositif de nettoyage robotisé maître (10) et l'au moins un dispositif de nettoyage robotisé esclave (30) étant sélectionnés de manière à être de types différents dans ledit groupe.

8. Système selon l'une quelconque des revendications précédentes, dans lequel :
l'interface de communication sans fil (29) du dispositif de nettoyage robotisé maître (10) est configurée pour communiquer avec l'interface de communication sans fil (31) de l'au moins un dispositif de nettoyage robotisé esclave (30) par le biais d'un réseau local sans fil (60), noté WLAN.

9. Système selon l'une quelconque des revendications précédentes, dans lequel :
l'interface de communication sans fil (29) du dispositif de nettoyage robotisé maître (10) est configurée pour recevoir sans fil des instructions en provenance d'un terminal mobile (80), les instructions soumises à l'au moins un dispositif de nettoyage robotisé esclave (30) pour commander une opération de nettoyage de l'au moins un dispositif de nettoyage robotisé esclave (30) étant basées sur les instructions reçues en provenance du terminal mobile (80).

10. Système selon l'une quelconque des revendications précédentes, dans lequel :
l'au moins un dispositif de nettoyage robotisé esclave (30) comprend une ou un ou plusieurs sources de lumière (38) ou réflecteurs lumineux conçues ou conçus pour être détectables par le dispositif de détection d'obstacles (23, 27, 28) du dispositif de nettoyage robotisé maître (10).

11. Système selon l'une quelconque des revendications précédentes, dans lequel :
l'au moins un dispositif de nettoyage robotisé esclave (30) comprend au moins un détecteur optique conçu pour détecter de la lumière émise par le dispositif de détection d'obstacles (23, 27, 28) du dispositif de nettoyage robotisé maître (10) ; et
l'au moins un dispositif de nettoyage robotisé esclave (30) est configuré pour communiquer au dispositif de nettoyage robotisé maître (10), par le biais de son interface de communication sans fil (31), une indication que la lumière émise est détectée par le détecteur optique.

12. Système selon la revendication 11, dans lequel :
l'unité de commande (22) du dispositif de nettoyage robotisé maître (10) est configurée pour synchroniser une horloge de fonctionnement du dispositif de nettoyage robotisé maître avec une horloge de fonctionnement de l'au moins un dispositif de nettoyage robotisé esclave sur la base de l'indication que la lumière émise est détectée par le détecteur optique (39).

13. Procédé, réalisé par un dispositif de nettoyage robotisé maître (10) comprenant un système de propulsion comprenant des moyens d'entraînement prenant la forme de moteurs de roue électriques (15, 16) destinés à permettre le mouvement de roues motrices (12, 13), de commande d'au moins un dispositif de nettoyage robotisé esclave (30), comprenant :
la détection (S101) d'obstacles ;
l'obtention (S102) de données de position à partir de la détection d'obstacles ;
le positionnement (S103) du dispositif de nettoyage robotisé maître (10) par rapport aux obstacles détectés à partir des données de position obtenues ;
la commande (S104) du déplacement du dispositif de nettoyage robotisé maître (10) sur la base des données de position ; et
la soumission (S105) de commandes à l'au moins un dispositif de nettoyage robotisé esclave (30) pour commander une opération de nettoyage dudit au moins un dispositif de nettoyage robotisé esclave (30), les commandes étant basées sur les données de position obtenues, l'opération de nettoyage du dispositif de nettoyage robotisé maître (30) étant commandée ainsi qu'indiqué par les commandes soumises.

14. Procédé selon la revendication 13, dans lequel les commandes soumises par le dispositif de nettoyage robotisé maître (10) comprennent des données indiquant une surface (40) sur laquelle l'au moins un dispositif de nettoyage robotisé esclave (30) a pour instruction de se déplacer.

15. Procédé selon les revendications 13 ou 14, dans lequel les commandes soumises par le dispositif de nettoyage robotisé maître (10) comprennent des données indiquant une heure à laquelle l'au moins un dispositif de nettoyage robotisé esclave (30) a pour instruction de réaliser l'opération de nettoyage.

16. Procédé selon l'une quelconque des revendications 13 à 15, dans lequel les commandes soumises par le dispositif de nettoyage robotisé maître (10) comprennent une instruction donnée à l'au moins un dispositif de nettoyage robotisé esclave (30) de retourner à son chargeur après que l'opération de nettoyage a été réalisée.

17. Procédé selon l'une quelconque des revendications 13 à 16, dans lequel les commandes soumises par le dispositif de nettoyage robotisé maître (10) comprennent une instruction donnée à l'au moins un dispositif de nettoyage robotisé esclave (30) d'enlever des débris d'une surface à nettoyer et rassembler les débris en vue de leur ramassage ultérieur par le dispositif de nettoyage robotisé maître (10).

18. Programme d'ordinateur (25) comprenant des instructions exécutables par ordinateur destinées à amener un dispositif de nettoyage robotisé maître (10) à réaliser les étapes énumérées dans l'une quelconque des revendications 13 à 17 lorsque les instructions exécutables par ordinateurs sont exécutées sur une unité de traitement (22) contenue dans le dispositif.

19. Produit-programme d'ordinateur comprenant un support lisible par ordinateur (26), le support lisible par ordinateur incorporant le programme d'ordinateur (25) selon la revendication 18.
